# EUROPÄISCHE PATENTSCHRIFT

(11) **EP 0 403 937 B1**
(45) Veröffentlichungstag und Bekanntmachung des Hinweises auf die Patenterteilung: **18.01.1995**
(21) Anmeldenummer: 90111113.8
(22) Anmeldetag: 12.06.1990
(51) Int. Cl.: H02G 15/013

(54) **Universalmuffe mit längsgeteiltem Muffenrohr und stirnseitigen Dichtungskörpern**
Universal sleeve with longitudinally split sleeve pipe and end sealing bodies
Manchon universel à tuyau de manchon divisé longitudinalement et corps frontaux d'étanchéité

(30) Priorität: 20.06.1989 DE 3920126
(43) Veröffentlichungstag der Anmeldung: 27.12.1990
(73) Patentinhaber: RXS Schrumpftechnik-Garnituren GmbH, D-58093 Hagen (DE)
(72) Erfinder: Meltsch, Hans-Jürgen, D-5840 Schwerte 4 (DE); Gräfe, Detlef, D-5800 Hagen 7 (DE)
(74) Vertreter: Fuchs, Franz-Josef, Dr.-Ing.

(56) Entgegenhaltungen:
- DE-A- 2 427 677
- DE-A- 3 025 766
- DE-B- 1 177 708
- DE-U- 7 516 723
- FR-A- 2 280 992
- FR-A- 2 290 067
- US-A- 2 881 241

## Beschreibung

Die Erfindung betrifft eine Kabelmuffe aus einem längsgeteilten Muffenrohr mit längsseitigem Verschlußsystem und mit stirnseitigen Dichtungskörpern, in denen abdichtbare Einführungsöffnungen angeordnet sind, wobei mindestens einer der Dichtungskörper mindestens einen abstehenden Einführungsstutzen aufweist, der zwei in Richtung der Längsachse bis in den Dichtungskörper durchgeführte Längsteilungen aufweist, so daß jeweils zwei sich ergänzende Dichtungskörper-Sektorenausschnitte gebildet sind, wobei am freien Ende jedes Einführungsstutzens ein durchmesserausgleichendes Dichtelement angeordnet ist.

Aus der DE-PS 24 27 677 sind Dichtungskörper aus Kunststoff für Kabelmuffen der obengenannten Art bekannt. Die erforderlichen Einführungsöffnungen für Kabel werden je nach Bedarf und mit dem erforderlichen Durchmesser eingeschnitten. Die Abdichtung erfolgt mit Hilfe von plastischer Dichtungsmasse. Da dort die Einführungsöffnungen entlang der Teilungsebene des Dichtungskörpers angeordnet werden, sind nur wenige Einführungen pro Seite der Kabelmuffe möglich. Weiterhin muß der Durchmesser jeweils unter Berücksichtigung der eingelegten Dichtungsmasse auf das jeweils einzuführende Kabel abgestimmt und eingeschnitten werden. Zusätzlich sind besondere Zugabfangvorrichtungen für die Kabel vorzusehen, da infolge der plastischen Dichtungsmasse bei Zug- und Druckbelastung der Kabel im Dichtungsbereich eine Bewegung stattfinden kann.

Weiterhin ist das deutsche Gebrauchsmuster DE-U-7 516 723 auf diesem Gebiet bekannt, bei dem der Dichtungskörper Einführungsstutzen enthält, die bis in den Dichtungskörper hinein längsgeteilt sind. Die Anordnung ist jedoch nicht variabel,so daß kein universeller Einsatz möglich ist. Außerdem genügen die Dichtungen in den Trennebenen nur einfachen Anforderungen.

Aufgabe der Erfindung ist nun, eine Universalmuffe zu schaffen, bei der eine unkompliziertere Durchmesseranpassung möglich ist, wobei die Kabelabfangung unter Beibehaltung der bereits bekannten Vorteile solcher Kabelmuffen erleichtert werden soll. Die gestellte Aufgabe wird nun mit einer Kabelmuffe der eingangs beschriebenen Art dadurch gelöst, daß ausschneidbare, angepaßte Einführungsöffnungen zusätzlich zu den Einführungsstutzen im Dichtungskörper angeordnet sind, daß der Dichtungskörper in den zusätzlichen Einführungsöffnungen in an sich bekannter Weise Lamellenstruktur aus hintereinanderliegenden Lamellen aufweist, daß die Dichtungszonen der Trennebenen des Dichtungskörpers Lamellenstruktur aufweisen und daß in den längsseitigen Dichtungsebenen Nut- und Federanordnungen angeordnet sind und daß in den längsverlaufenden Trennungsebenen des Einführungsstutzens und des Dichtungskörpers Abdichtungen angeordnet sind.

Die Vorteile der Kabelmuffe nach der Erfindung sind nun besonders darin zu sehen, daß sich insgesamt bei einfachster Montage in den Einführungsbereichen auch weitere Probleme bezüglich der mechanischen Abfangung, des Durchmesserüberganges zwischen Einführungsöffnungen und Kabel in einfacher Weise mitlösen lassen. Weiterhin ist von Vorteil, daß nun auch nachträgliche Änderungen in einem Einführungsbereich durchgeführt werden können, während die übrigen Abdichtungen desselben Dichtungskörpers davon unberührt bleiben. Mit den Abdichtungselementen in Form von schrumpfbaren Schläuchen bzw. Manschetten an den Einführungsstutzen lassen sich auch zusätzlich noch Abzweigungen herstellen, so daß auch in dieser Art eine vorteilhafte Variante hinzukommt. Im übrigen lassen sich auch die an sich bisher bekannten Kabeleinführungen nach dem eingangs genannten Stand der Technik mit in die Einführungssysteme gemäß der Erfindung integrieren, das heißt, es können neben den Einführungsstutzen auch zusätzliche Einführungsöffnungen mit angepaßten Durchmessern in die Dichtungskörper eingeschnitten werden. Es bietet sich beispielsweise an, daß zunächst die herkömmlichen Einführungen vorgenommen werden und daß dann bei späteren Erweiterungen die Einführungen in den Einführungsstutzen gemäß der Erfindung benutzt werden. Auf diese Weise können die ursprünglichen Dichtungsbereiche unberührt bleiben, da die neuen Einführungen und Abdichtungen separat gemäß der Erfindung durchgeführt werden.

Die Erfindung wird nun anhand von zwanzig Figuren wie nachstehend aufgeführt ist, näher erläutert.
- Figur 1:: Kabelmuffe gemäß der Erfindung im Schnittbild.
- Figur 2:: Ausführungsbeispiel eines ersten Dichtungskörper-Sektorenausschnittes.
- Figur 3:: Der zum Ausführungsbeispiel nach Figur 2 ergänzende Dichtungskörper-Sektorenausschnitt.
- Figur 4:: Dichtungskörper, bestehend aus zwei Dichtungskörper-Sektorenausschnitten im zusammengesetzten Zustand.
- Figur 5:: Zusammensetzung der Dichtungskörper-Sektorenausschnitte durch Einkippen.
- Figur 6:: Zusammensetzung der Dichtungskörper-Sektorenausschnitte durch gegenseitiges Einrasten.
- Figur 7:: Zusammensetzung der Dichtungskörper-Sektorenausschnitte durch Längseinschiebung.
- Figur 8:: Ausformung der Trennungsebenen im Einführungsstutzen.
- Figur 9:: Weitere Ausformung der Trennungsebenen im Einführungsstutzen.
- Figur 10:: Gegenseitige Fixierung der Dichtungskörper-Sektorenausschnitte.
- Figur 11:: Ein zweites Beispiel zur gegenseitigen Fixierung der Dichtungskörper-Sektorenausschnitte.
- Figur 12:: Seitenansicht eines Dichtungskörpers mit Einführungsstutzen gemäß der Erfindung.
- Figur 13:: Äußerer Abschluß eines Einführungsstutzens.
- Figur 14:: Innerer Abschluß eines Einführungsstutzens.
- Figur 15:: Stufenmäßige Durchmesserreduzierung bei einem zylindrischen Einführungsstutzen.
- Figur 16:: Konische Ausführung eines Einführungsstutzens.
- Figur 17:: Stufenmäßige Durchmesserreduzierung bei einem konischen Einführungsstutzen.
- Figur 18:: Durchmesserreduzierung vom Durchmesser des Einführungsstutzens auf den Durchmesser des Kabels mit Hilfe eines am Einführungsstutzen befestigten bzw. angeformten Stützelementes im Übergangsbereich
- Figur 19:: Ein separates Stützelement zur Durchmesserreduzierung von Einführungsstutzen auf das Kabel.
- Figur 20:: Zusammenfassende Skizze für die Kombinationsmöglichkeiten von Kabeleinführungen in der Stirnfläche eines Dichtungskörpers gemäß der Erfindung.

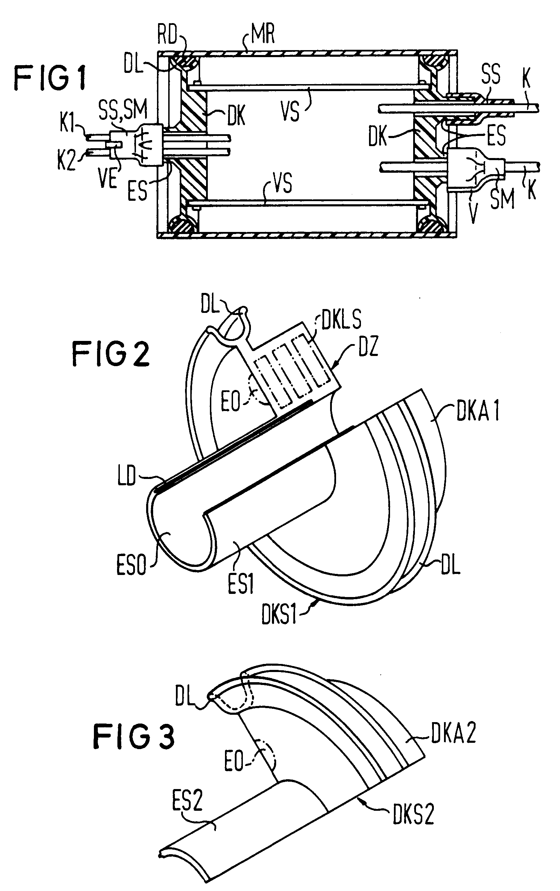

Figur 1 zeigt eine Kabelmuffe, bestehend aus einem Muffenrohr MR und zwei seitlich angeordneten Dichtungskörpern DK. Die Dichtungskörper DK bestehen in bekannter Weise aus Kunststoff und besitzen, was hier nicht gezeigt ist, beispielsweise im Inneren Lamellenstruktur, das heißt es sind in Einführungsrichtung hintereinander liegende Lamellen angeordnet, zwischen denen sich jeweils Zwischenräume befinden, wie es auch aus dem genannten Stand der Technik bekannt ist. Diese Struktur ist besonders dann wichtig, wenn auch zusätzlich Kabeleinführungen vorgesehen werden, die durch kreisförmiges Ausschneiden, dem jeweiligen Durchmesser angepaßt, hergestellt werden. In dieser Figur 1 ist der Übersichtlichkeit wegen diese Art der an sich bekannten Einführungen nicht gezeigt. So werden hier die Möglichkeiten angedeutet, die sich bei einer Ausführung mit angeformten Einführungsstutzen ES gemäß der Erfindung am Dichtungskörper DK anbieten. So besitzt hier jeder Dichtungskörper DK einen bzw. zwei Einführungsstutzen ES, die in diesem Fall nach außen gerichtet sind. Im Prinzip können die Einführungsstutzen auch in die Muffe hineingerichtet sein. Diese Einführungsstutzen ES besitzen einen inneren Druchmesser, der größer ist als die eingeführten Kabel K. Die Erfindung sieht nun unter anderem vor, daß die Abdichtung zwischen dem Ende des Kabeleinführungsstutzens ES und den eingeführten Kabeln K mit einem durchmesserausgleichenden Dichtelement vorgenommen wird. Hierfür werden in diesem Fall schrumpfbare Elemente verwendet, die je nach Erfordernis ausgebildet sind. Durchmesserausgleichende Dichtelemente aus elastischem Material sind ebenso einsetzbar und wären zum Beispiel bei Reparaturarbeiten als vorübergehende Verschlüsse vorteilhaft. Bei der Abdichtung von ungeschnittenen Kabeln kann zum Beispiel bereits vor dem Einführen des Kabels K ein Schrumpfschlauch SS aufgeschoben werden. Bei Einführung von ungeschnittenen bzw. bereits eingeführten Kabeln K wird jeweils eine Schrumpfmanschette SM verwendet, die herumgelegt und dann mit einem Längsverschluß V verschlossen wird. Weiterhin zeigt sich die Möglichkeit an, daß mehrere Kabel K aus einem Eingangsstutzen ES heraus- bzw. hineingeführt werden können. Die Abdichtung erfolgt dann ebenfalls mit Hilfe eines Schrumpfschlauches SS oder einer Schrumpfmanschette SM, wobei zwischen den Kabeln ein zusätzliches Dichtungselement in Form eines Verteilerelementes VE, zum Beispiel in Form einer Klammer angeordnet wird. Nachdem die schrumpfbaren Dichtungselemente angeordnet sind, können sie dichtend aufgeschrumpft werden, wobei im allgemeinen diese Dichtelemente mit einer Innenbeschichtung aus einem Schmelzkleber versehen sind, wodurch die Dichtungswirkung erhöht wird. Wie leicht zu erkennen ist, kann jede Einführung für sich unabhängig von den anderen Einführungen behandelt werden, was sich besonders vorteilhaft bei nachträglichen Änderungen auswirkt. Die Problematik liegt jedoch darin, daß bei Behandlung einzelner Einführungen die anderen Abdichtungen unverletzt bleiben sollen. Dies ist nur dann besonders einfach, wenn durch die jeweils betreffende Einführung ein Längsschnitt bzw. eine Längstrennung durchgeführt ist. Bei der hier gezeigten schematischen Darstellung dieser Figur 1 sind zur Vereinfachung und zur Erläuterung durch alle Einführungen Schnitte gelegt. Die Besonderheiten gemäß der Erfindung mit teilweise geteilten Dichtungskörpern mit geeigneten Winkelausschnitten werden im folgenden näher erläutert. Dadurch, daß bei den Abdichtungen gemäß der Erfindung mit Hilfe eines durchmesserausgleichenden Dichtelementes, insbesondere mit schrumpfbaren Elementen erfolgt, lassen sich im Gegensatz zu bisherigen Lösungen die Kabelabfangvorrichtungen einfacher gestalten, wenn sie bei entsprechender Dimensionierung nicht sogar ganz entfallen können. Das Material und die Stärke der schrumpfbaren Dichtungselemente SS bzw. SM können so augewählt werden, daß die mechanische Festigkeit ausreicht, die an den Kabeln auftretenden mechanischen Belastungen aufzufangen bzw. zu überbrücken. Durch Verwendung von festen Dichtungsmitteln, wie zum Beispiel von rutschfesten Schmelzklebern, die bei normaler Betriebstemperatur fest sind, können im Dichtungsbereich keine Längsbewegungen mehr stattfinden, wie dies bei plastischen Dichtungsmitteln der Fall ist. Diese Bewegungen erfordern bisher zusätzliche Festlegungsmaßnahmen für die Kabel. Dies kann nun zumindest weitgehend entfallen, da zwischen dem Kabel und dem Eingangsstutzen über das starre, geschrumpfte Dichtelement eine starre Verbindung besteht.

Die Figuren 2 und 3 zeigen nun die Teilung eines Dichtungskörpers DK in zwei Dichtungskörper-Sektorenausschnitte DKS1 und DKS2, wobei die beiden Schnittebenen durch den Einführungsstutzen ES und den Dichtungskörper DK unter einem Winkel zueinander so gelegt wurden, daß sich das einzuführende Kabel in die Einführungsöffnung ESO nach Abnahme des außen liegenden Dichtungskörper-Sektorenausschnittes DKS2 im verbleibenden Dichtungskörper-Sektorausschnitt DKS1 einführen läßt. Die Schnittebenen sind vorzugsweise so gelegt, daß sich dreieckförmige Ausschnittsteile ergeben. Eine Durchmesseranpassung ist hier nicht erforderlich, da diese mit Hilfe des am Ende aufzusetzenden Schrumpfschlauches bzw. der Schrumpfmanschette durch Aufschrumpfen durchgeführt wird. Es ist hier erkennbar, daß zum Beispiel der Dichtungskörper-Sektorausschnitt DKS1 nach Figur 2 einen größeren Winkelbereich umfaßt als der dazu passende Dichtungskörper-Sektorausschnitt DKS2 nach Figur 3. Im übrigen sind die Dichtungsbereiche der Längsdichtung LD, bestehend beispielsweise aus Nut-Federsystemen, im Einführungsstutzenteil ES1 und die Ringdichtung des eigentlichen Dichtungskörpers DK mit den Dichtlippen DL zu sehen, wobei die tatsächliche Ausgestaltung von untergeordneter Bedeutung ist für die sonstige Ausgestaltung der Erfindung. Weiterhin ist hier angedeutet, daß die Dichtzonen DZ im Dichtungskörperansatz DKA1 Lamellenstruktur aufweisen können, wie es an sich bereits bekannt ist. Bei einer derartigen Ausgestaltung lassen sich somit zusätzlich Kabeleinführungen EO durch angepaßtes Ausschneiden herstellen. Wie später noch gezeigt wird, müssen die Kabeleinführungsstutzen ES nicht zentrisch im Dichtungskörper angeordnet sein, sodaß vielerlei Varianten zur Verfügung stehen. In den Dichtungszonen DZ können zusätzlich noch mechanische Führungen oder Verankerungen vorgesehen werden, die beim Zusammensetzen eine gegenseitige Führung und Halterung gewährleisten. Auch die Querschnittsform des Einführungsstutzens ES ist nicht zwingend vorgegeben. So sind zum Beispiel auch ovale Ausbildungen denkbar, besonders bei Verzweigungseinführungen, da dann mehrere Kabel nebeneinander in einer Einführungsöffnung geführt werden können. Die Abdichtung einer Verzweigung erfolgt nach der bereits in Figur 1 beschriebenen Art.

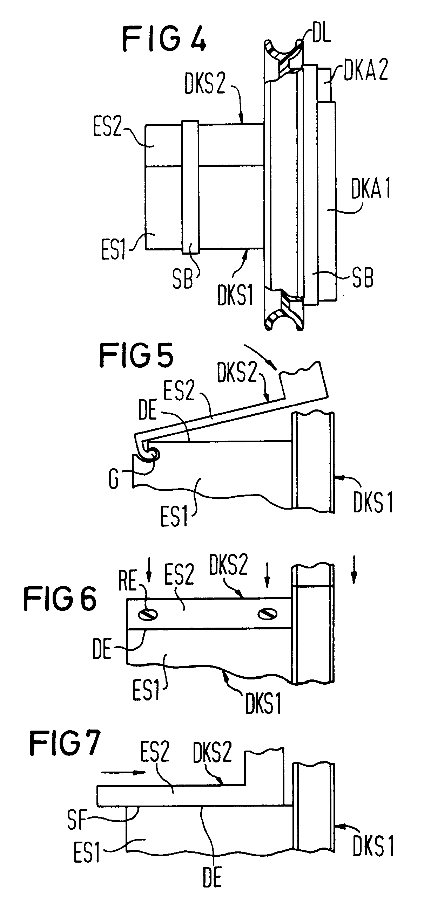

Figur 4 zeigt eine Möglichkeit zur Fixierung der beiden zusammengesetzten Dichtungskörper-Sektorausschnitte DKS1 und DKS2 mit Hilfe von Spannbändern SB, wobei eines dieser Spannbänder SB auf den Dichtungskörperansätzen DKA1 und DKA2 und ein anderes etwa am Ende des Einführungsstutzens ES1 und ES2 angeordnet sind. Im Grunde genügt hier zur Fixierung bereits der später aufgezogene Schrumpfgegenstand. Die Darstellung ist vereinfacht und sagt nichts aus in welchen Winkelgrößen die Einheiten Einführungsstutzen-Dichtungskörper geteilt sind. Es sind Halbierungen, Teilungen in ungleichen Winkeln, mittig wie auch außermittig im Einführungsbereich des Dichtungskörpers möglich. Dies gilt für alle Ausführungsformen. Bevorzugter Weise werden die Einführungsstutzen außermittig angeordnet, da sich dann kleinere Teilausschnitte ergeben und da außerdem im Innenbereich Zusatzeinführungsöffnungen durch Ausschneiden besser angeordnet werden können.

Die Figur 5 zeigt eine Fixierung der beiden Dichtungskörper-Sektorausschnitte DKS1 und DKS2 mit Hilfe eines Gelenkes G, das an den äußeren Enden der Einführungsstutzenteile ES1 und ES2 so angeordnet ist, daß die beiden gelenkig zusammengeführten Teile bis zur Berührung entlang der Dichtebene eingekippt werden können. Diese Kippbewegung wird durch den Pfeil angedeutet. Das Gelenk G ist zweckmäßigerweise so ausgebildet, daß sich die beiden Teile voneinander trennen lassen. In der längsseitigen Dichtungsebene DE können wie bei allen anderen Ausführungsbeispielen Dichtungseinlagen beliebiger Art angeordnet werden.

Die Figur 6 zeigt ein weiteres Beispiel zur Fixierung der beiden Dichtungskörper-Sektorenausschnitte DKS1 und DKS2 mit Hilfe von Rastelementen RE, die beim senkrechten Aufeinanderpressen der beiden Teile eine gegenseitige Verankerung bewirken.

Die Figur 7 zeigt die gegenseitige Verbindung der Dichtungskörper-Sektorausschnitte DKS1 und DKS2 mit einem Schiebemechanismus. In den Dichtebenen DE sind Schiebeführungen SF angeordnet, womit beide Teile gleichzeitig ineinander verankert sind.

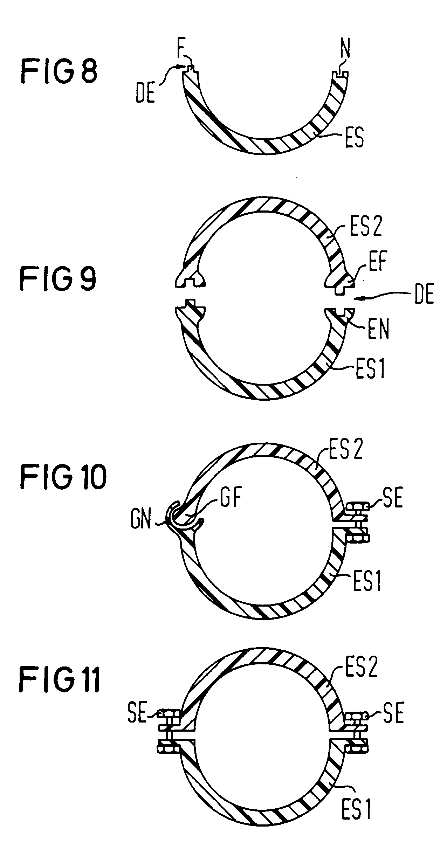

In Figur 8 wird die Gestaltung der Dichtebenen DE zwischen den Einführungsstutzen DS erläutert, wobei hier die Wandung des Einführungsstutzens ES so dick ist, daß die Führungs- wie auch Dichtelemente in Form einer Feder und einer Nut innerhalb der Wandungsbreite ausgeformt werden können.

Die Figur 9 hingegen zeigt ein Ausführungsbeispiel für relativ dünnwandige Einführungsstutzen ES, bei denen dann im Bereich der Dichtebenen DE eine Erweiterung der Wandung einseitig oder wie hier gezeigt ist, zweiseitig ausgeführt ist, so daß dann auch hier die Ausbildung der Dichtungselemente wieder möglich wird. Bei der bevorzugt einseitig ausgeführten Erweiterung ins Innere des Einführungsstutzens ergibt sich dann eine nach außen hin glatte Fläche, so daß sich hier kein Übergangswulst bildet. Als Dichtungseinlagen kommen an sich bekannte elastische wie auch plastische Kunststoffmaterialien in Frage, wobei auch eine Kombination von beiden Materialien möglich ist. Auch ist ein beidseitig mit einer Nut ausgeformtes Dichtungssystem möglich, so daß sich eine geschlossene Dichtnut ergibt, in welche eine Dichtungsschnur eingelegt werden kann. Hier ist dann zusätzlich eine seitliche Führung vorzusehen, um eine seitliche Verschiebung zu verhindern.

Die Figur 10 zeigt in einer Skizze, daß die Längsfixierung der beiden Einführungsstutzenteile ES1 und ES2 auch mit seitlichen Flanschen oder Ansätzen versehen werden können. Hier ist eine Längsseite mit einer gelenkartigen Führungsnut GN versehen, während die Gegenseite mit einer verdickten Führungsfeder GF versehen ist. Auf diese Weise läßt sich das einzusetzende Einführungsstutzenteil S2 in geführter Weise in Position bringen. Die zweite Längsseite ist mit Flanschen versehen, in welche Schraubelemente SE zur endgültigen Fixierung eingesetzt sind.

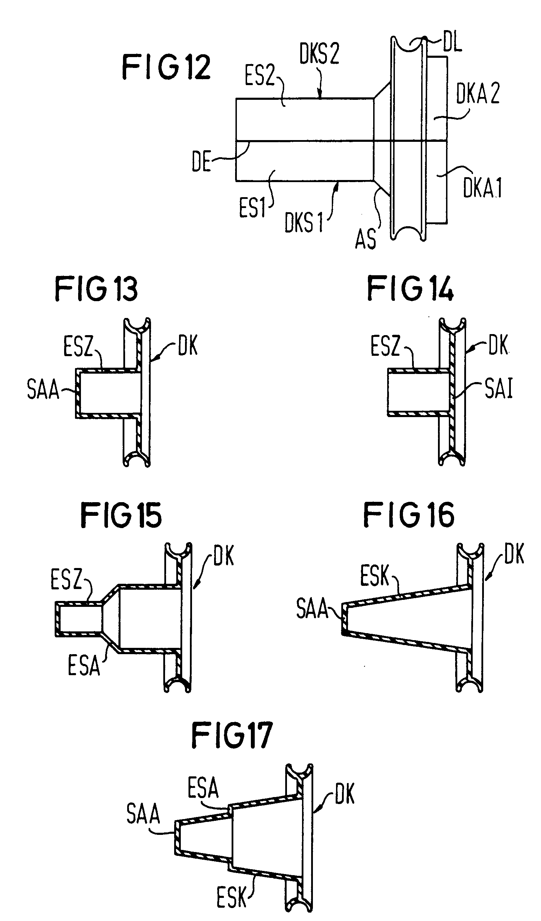

Die Figur 11 zeigt eine ähnliche Ausführung wie die nach Figur 10, wobei hier an den beiden Längsseiten die gleiche Ausbildung mit Flanschen gewählt wird.

Die Figur 12 erläutert in einfacher Weise nochmals die zusammengesetzte Kombination aus den beiden Längsteilen ES1 und ES2 des Einführungsstutzens ES, der über eine Ansatzschräge AS an den eigentlichen Dichtungskörper DK der Kabelmuffe angeformt ist. Auch hier ist anzufügen, daß die Teilung der Längsrichtung unter beliebigen, den Erfordernissen angepaßten Winkelteilungen erfolgen kann. Bezogen auf den Mittelpunkt eines Einführungsstutzens ES sind für die nach außen abziehbaren Dichtungskörper-Sektorenausschnitte Winkelbereiche von 10° bis 180°, vorzugsweise von 90° - 180° für universellen Einsatz geeignet.

Die Figuren 13 bis 17 dienen der Erläuterung für die Ausbildung der Einführungsstutzen ES, wobei eine einfache schematische Darstellung gewählt wurde.

Figur 13 verdeutlicht einen zylindrischen Einführungsstutzen ESZ am Dichtungskörper DK, bei dem zusätzlich am äußeren Ende des Einführungsstutzens eine Abschlußwandung SAA angeordnet wurde, während im Ausführungsbeispiel nach Figur 14 eine solche Abschlußwandung SAI am inneren Ende des Einführungsstutzens ESZ eingesetzt ist. Eine solche Abschlußwandung ist dann von Nutzen, wenn zunächst durch diesen Einführungsstutzen keine Kabeleinführung vorgenommen wird. Auf diese Weise ist der Dichtungskörper DK ohne besondere Maßnahmen von vornherein dicht abgeschlossen. Bei Bedarf kann diese Abschlußwandung SAA bzw. SAI entfernt werden. Eine derartige Abschlußwandung könnte jedoch auch durch eine elastische oder auch eine geschrumpfte Kappe erfolgen, die am äußeren Ende des Einführungsstutzens aufgesetzt ist und die bei Bedarf entfernt werden kann.

Die Figur 15 zeigt ein Ausführungsbeispiel, bei dem eine grobe Durchmesservorwahl getroffen werden kann, so daß die Duchmesserunterschiede zwischen Öffnung und einzuführendem Kabel breits grob aufeinander abgestimmt werden können. Hierzu wählt man stufenförmige Absätze ESA und die Vorauswahl wird durch Abtrennen an der geeigneten Stufe vorgenommen.

Die Figur 16 zeigt eine konische Ausbildung eines Einführungsstutzens ESK, so daß auch hier eine grobe Voranpassung des Einführungsdurchmessers erfolgen kann.

In Figur 17 ist die konische Ausführungsform zusätzlich mit stufenförmigen Absätzen ESA ergänzt, so daß auch hier eine Grobanpassung erfolgen kann. Im übrigen gleichen sich die zylindrischen und konischen Ausführungsformen.

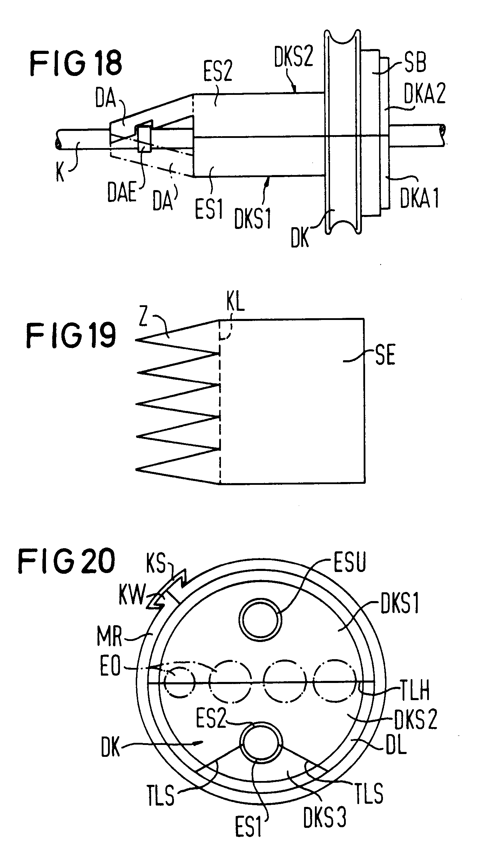

Figur 18 zeigt, wie man mit einer weiteren Ausgestaltung gemäß der Erfindung große Durchmesserunterschiede entweder über den ganzen Umfang verteilt oder nur in gewissen stützbedürftigen Bereichen, wie zum Beispiel unterhalb eines Längsverschlusses von Schrumpfmanschetten SM, eine Abstützung für durchmesserausgleichende Dichtelemente wie Schrumpfartikel erreichen kann. So kann man an das Ende eines Einführungsstutzens ES1 und/oder ES2 eine oder mehrere zungenartigen Anformungen als Durchmesserausgleichselemente mit Stützwirkung DA anbringen, die dann entlang einer ringförmig angeordneten Knicklinie einwärts bis zur Auflage auf das Kabel K abgebogen werden können. Diese Durchmesserausgleichselemente DA werden bei Bedarf noch mit einem Halteelement DAE zusammengehalten, so daß die entstandene konische Form fixiert wird wie die Figur zeigt. Durch die strichpunktierte Darstellung wird angedeutet, daß mehrere solche Durchmesserausgleichselemente DA angeordnet sein können. Sie dienen bei den Schrumpfmanschetten SM besonders im Untertrittbereich des Längsverschlusses als Gegenlager, wobei es unter Umständen dann genügt, wenn nur ein Einführungsstutzenteil ES2 eine solche zungenartige Verlängerung aufweist. Das Durchmesserausgleichselement DA kann entsprechend des verwendeten Schrumpfgegenstandes in seiner Länge auch verkürzt werden. Das Halteelement DAE kann auch zusätzlich als Abfangelement und auch als Zentrierelement für das eingeführte Kabel K benützt werden, so daß hiermit gleichzeitig das Kabel K mittig im Einführungsstutzen ES gelagert ist. Unabhängig davon können auch separate ringförmige Zentrierstücke mit angepaßten Durchmessern innerhalb der Einführungsstutzen ES zur Zentrierung der Kabel K angeordnet werden.

Die Figur 19 zeigt ein separates Stützelement SE, das zur Abstützung der durchmesserausgleichenden Dichtelemente, zum Beispiel der Schrumpfmanschette, verwendet werden kann. Dieses Stützelement SE besitzt einen rechteckigen Teil, an dem über eine Knicklinie KL spitz zulaufende Zungen Z angeformt sind. Bei der Montage wird nun das Stützelement SE mit seinem rechteckigen Teil um den Einführungsstutzen herumgeformt und fixiert.

Die flexiblen Zungen Z werden zum Durchmesserausgleich an der Knicklinie KL bis auf das einzuführende Kabel abgebogen und zumindest anschließend mit Hilfe des Schrumpfgegenstandes in der Lage fixiert. Auf diese Weise ergibt sich je nach Durchmesserausgleich ein mehr oder weniger geschlossenes Stützgebilde.

In Figur 20 sind nun zusammenfassend die Einführungsmöglichkeiten an der Stirnseite eines Dichtungskörpers DK dargestellt. So ist dieser Dichtungskörper DK in der Teilungslinie THL halbiert. Entlang dieser Trennebene können nun Kabeleinführungen EO nach der bisher bekannten Art je nach Bedarf und in angepaßter Größe eingeschnitten werden. Weiterhin ist angedeutet, daß ein ungeschnittener Einführungsstutzen ESU zum Beispiel im oberen Dichtungskörperteil DKS1 fest angeformt ist. Zweckmäßigerweise besitzt dieser Einführungsstutzen ESU eine Abschlußwandung nach der beschriebenen Art und kann somit erst bei Bedarf geöffnet werden. Die Einführungsmöglichkeiten wurden eingehend diskutiert. Im unteren Dichtungskörperteil DKS2 ist nun zusätzlich ein geschnittener Einführungsstutzen ES1-ES2 angeordnet und zwar ist hier der etwa dreieckförmige Dichtungskörper-Sektorausschnitt DKS3 nach auswärts abnehmbar, so daß man auf diese Weise auch ungeschnittene Kabel einführen kann und zwar auch dann unabhängig von den anderen Abdichtungen, so daß diese unberührt bleiben. In den Trennebenen TLS erfolgt dann in der beschriebenen Weise die Längsabdichtung. Weiterhin ist erkennbar, daß der gesamte Dichtungskörper DK mit seiner umlaufenden Lippendichtung DL innerhalb des Muffenrohres MR, das einen keilförmigen Längsverschluß mit Keilwülsten KW und eine Klemmschiene KS aufweist, dichtend eingespannt ist.

Die Dichtfunktion zum Kabel kann im Schrumpfbereich des Dichtelementes durch eine zusätzliche ringförmige, plastische Dichtungseinlage bei Bedarf verbessert werden.

Der Dichtungskörper besteht aus Kunststoff und kann auch mit einem Flammschutz versehen werden. Die Einführungsstutzen können am Dichtungskörper angeformt sein oder als Rohr in einer ausgeschnittenen Einführungsöffnung dichtend eingesetzt werden. In einem solchen Fall kann das Rohr dann sogar aus Metall bestehen.

Zusammenfassend können nun gegenüber dem Stand der Technik folgende Vorteile gesehen werden:
- Durch die Vielfalt der Einführungsmöglichkeiten können praktisch alle herkömmlichen Fälle erfaßt werden und zwar mit geschnittenen wie auch ungeschnittenen Kabeln.
- Eine bisher übliche mechanische Abfangvorrichtung kann infolge der starren Abdichtung an den Enden der Einführungsstutzen weitgehend entfallen, so daß keine Zusatzelemente mehr benötigt werden.
- Durch die verschiedenen Teilungsvarianten ergeben sich Möglichkeiten zum Wiederöffnen und Schließen einzelner Kabeleinführungen ohne Verletzung der dabei nicht betroffenen Abdichtungen.
- Die Abdichtugnen sind einfach und deshalb wenig störanfällig.
- Die Montagetechnik ist einfach und mit handelsüblichem Werkzeug durchführbar.
- Nachträgliches Einführen von Kabeln ist ohne Öffnen des Dichtungskörpers möglich.

## Patentansprüche

1. Kabelmuffe aus einem längsgeteilten Muffenrohr mit längsseitigem Verschlußsystem und mit stirnseitigen Dichtungskörpern, in denen abdichtbare Einführungsöffnungen angeordnet sind, wobei mindestens einer der Dichtungskörper (DK) mindestens einen abstehenden Einführungsstutzen (ES) aufweist, der zwei in Richtung der Längsachse bis in den Dichtungskörper (DK) durchgeführte Längsteilungen aufweist, so daß jeweils zwei sich ergänzende Dichtungskörper-Sektorenausschnitte (DKS1, DKS2, DKS3) gebildet sind, wobei am freien Ende jedes Einführungsstutzens ein durchmesserausgleichendes Dichtelement (SS, SM) angeordnet ist,
**dadurch gekennzeichnet**,
daß ausschneidbare, angepaßte Einführungsöffnungen (E0) zusätzlich zu den Einführungsstutzen (ES) im Dichtungskörper (DK) angeordnet sind, daß der Dichtungskörper (DK) in den zusätzlichen Einführungsöffnungen in an sich bekannter Weise Lamellenstruktur (DKLS) aus hintereinanderliegenden Lamellen aufweist, daß die Dichtungszonen (DZ) der Trennebenen des Dichtungskörpers (DK) Lamellenstruktur (DKLS) aufweisen und daß in den längsseitigen Dichtungsebenen (DE) Nut- und Federanordnungen angeordnet sind und daß in den längsverlaufenden Trennungsebenen des Einführungsstutzens (ES) und des Dichtungskörpers (DK) Abdichtungen (LD) angeordnet sind.

2. Kabelmuffe nach Anspruch 1,
**dadurch gekennzeichnet,**
daß Klemmvorrichtungen, insbesondere Schrauben oder Spannbänder (SB) zum Schließen der Dichtungskörper-Sektorenausschnitte (DKS1, DKS2, DKS3) angeordnet sind.

3. Kabelmuffe nach Anspruch 1,
**dadurch gekennzeichnet,**
daß Rastelemente (RE) zwischen den Dichtungskörper-Sektorenausschnitten (DKS1, DKS2, DKS3) angeordnet sind.

4. Kabelmuffe nach Anspruch 1,
**dadurch gekennzeichnet,**
daß verhakende Schiebeführungen (SF, GN-GF) zwischen den Dichtungskörper-Sektorenausschnitten (DKS1, DKS2, DKS3) angeordnet sind.

5. Kabelmuffe nach Anspruch 1,
**dadurch gekennzeichnet,**
daß ein Gelenk (G) am Ende der Einführungsstutzen-Sektoren (ES1, ES2) angeordnet ist.

6. Kabelmuffe nach einem der vorhergehenden Ansprüche,
**dadurch gekennzeichnet,**
daß plastische Dichtungseinlagen in den Dichtungsebenen (DE) angeordnet sind.

7. Kabelmuffe nach einem der Ansprüche 1 bis 5,
**dadurch gekennzeichnet,**
daß elastische Dichtungseinlagen in den Dichtungsebenen (DE) angeordnet sind.

8. Kabelmuffe nach einem der vorhergehenden Ansprüche,
**dadurch gekennzeichnet,**
daß die Winkelteilung der Sektorentrennung 180° beträgt.

9. Kabelmuffe nach einem der Ansprüche 1 bis 7,
**dadurch gekennzeichnet,**
daß die Winkelteilung der Sektorentrennung ungleich ist, wobei der Winkelbereich, bezogen auf den Mittelpunkt eines Einführungsstutzens für den nach außen abziehbaren Dichtungskörper-Sektorenausschnitt (DKS1, DKS2, DKS3) 10° bis 180°, vorzugsweise 90° - 180° beträgt.

10. Kabelmuffe nach einem der vorhergehenden Ansprüche,
**dadurch gekennzeichnet,**
daß eine Ansatzschräge (AS) im Übergangsbereich zwischen Einführungsstutzen (ES) und dem Dichtungskörper (DK) angeordnet ist.

11. Kabelmuffe nach einem der vorhergehenden Ansprüche,
**dadurch gekennzeichnet**,
daß der Einführungsstutzen (ESZ) zylindrische Form aufweist.

12. Kabelmuffe nach einem der Ansprüche 1 bis 10,
**dadurch gekennzeichnet,**
daß der Einführungsstutzen (ESK) zum freien Ende hin konisch verjüngt ist.

13. Kabelmuffe nach einem der vorhergehenden Ansprüche,
**dadurch gekennzeichnet,**
daß der Einführungsstutzen (ES) in Durchmesserabsätzen (ESA) abgestuft ist.

14. Kabelmuffe nach einem der vorhergehenden Ansprüche,
**dadurch gekennzeichnet,**
daß der Einführungsstutzen (ES) am äußeren Ende mit einer auftrennbaren Abschlußwandung (SAA) abgeschlossen ist.

15. Kabelmuffe nach einem der Ansprüche 1 bis 13,
**dadurch gekennzeichnet,**
daß der Einführungsstutzen (ES) am inneren Ende mit einer auftrennbaren Abschlußwandung (SAI) abgeschlossen ist.

16. Kabelmuffe nach einem der vorhergehenden Ansprüche,
**dadurch gekennzeichnet**,
daß ein Zentrierstück mit anpaßbarer Öffnung für das einzuführende Kabel im Einführungsstutzen vorzugsweise am äußeren Ende angeordnet ist.

17. Kabelmuffe nach einem der vorhergehenden Ansprüche,
**dadurch gekennzeichnet,**
daß konisch geformte Durchmesserausgleichsstücke (DA) am freien Ende des Einführungsstutzens (ES) angeordnet sind.

18. Kabelmuffe nach Anspruch 17,
**dadurch gekennzeichnet,**
daß die Durchmesserausgleichsstücke (DA) als Zungen (Z), vorzugsweise spitz zulaufend, ausgebildet sind.

19. Kabelmuffe nach einem der Ansprüche 17 oder 18,
**dadurch gekennzeichnet,**
daß das Durchmesserausgleichsstück als Stützeinlage (SE) mit anhängenden Zungen (Z) ausgebildet ist, welche entlang einer Knicklinie (KL) konisch abwinkelbar sind.

20. Kabelmuffe nach einem der Ansprüche 17 oder 18,
**dadurch gekennzeichnet,**
daß die Zungen Z) direkt am Ende des Einführungsstutzens (ES) angeformt sind.

21. Kabelmuffe nach einem der vorhergehenden Ansprüche,
**dadurch gekennzeichnet,**
daß ein Schrumpfschlauch (SS) als durchmesserausgleichendes Dichtelement ausgebildet ist.

22. Kabelmuffe nach einem der Ansprüche 1 bis 20,
**dadurch gekennzeichnet,**
daß eine längsgeschlitzte Schrumpfmanschette (SM) mit einem Verschlußsystem (V) als durchmesserausgleichendes Dichtelement ausgebildet ist.

23. Kabelmuffe nach einem der vorhergehenden Ansprüche,
**dadurch gekennzeichnet,**
daß das durchmesserausgleichende Dichtelement als Verzweigungseinheit mit einem klammerartigen Verteilerelement (VE) zwischen den ausgeführten bzw. eingeführten Kabeln ausgebildet ist.

24. Kabelmuffe nach einem der vorhergehenden Ansprüche,
**dadurch gekennzeichnet,**
daß ein Muffenrohr (MR), vorzugsweise aus thermoplastischem Material, auf die umlaufenden Dichtungslippen (DL) mit eingelegten Ringdichtungen (RD) der stirnseitig angeordneten Dichtungskörper (DK) aufgezogen und mit einem vorzugsweise aus keilförmigen Längswülsten (KW) und übergreifenden Klemmschienen (KS) bestehenden Verschlußsystem dichtend verschlossen ist.

25. Kabelmuffe nach einem der vorhergehenden Ansprüche,
**dadurch gekennzeichnet,**
daß die Einfführungsstutzen (ES) nach außen gerichtet sind.

26. Kabelmuffe nach einem der Ansprüche 1 bis 14,
**dadurch gekennzeichnet,**
daß die Einführungsstutzen (ES) nach innen gerichtet sind.

27. Kabelmuffe nach einem der vorhergehenden Ansprüche,
**dadurch gekennzeichnet,**
daß der Eingangsstutzen (ES) aus einem Rohr besteht, das in einer ausgeschnittenen Einführungsöffnung (EO) des Dichtungskörpers (DK) dicht eingesetzt ist.

## Claims

1. Cable sleeve consisting of a longitudinally divided sleeve tube having a sealing system on its longitudinal side and sealing bodies at its end faces, in which sealable entry holes are arranged, in which arrangement at least one of the sealing bodies (DK) has at least one projecting entry fitting (ES) which has two longitudinal divisions made in the direction of the longitudinal axis as far as the sealing body (DK) so that in each case two complementary sealing body sector cutouts (DKS1, DKS2, DKS3) are formed, a diameter-compensating seal element (SS, SM) being arranged at the free end of each entry fitting, characterized in that, in addition to the entry fittings (ES), matched entry holes (EO) which can be cut out are arranged in the sealing body (DK), in that the sealing body (DK) in the additional entry holes has, in a manner known per se, a lamellar structure (DKLS) consisting of lamellas arranged one behind the other, in that the sealing zones (DZ) of the dividing planes of the sealing body (DK) have a lamellar structure, in that groove and tongue arrangements are arranged in the sealing planes (DE) on the longitudinal side and in that seals (LD) are arranged in the longitudinal dividing planes of the entry fitting (ES) and of the sealing body (DK).

2. Cable sleeve according to Claim 1, characterized in that clamping devices, in particular screws or retaining straps (SB) for closing the sealing body sector cutouts (DKS1, DKS2, DKS3), are arranged.

3. Cable sleeve according to Claim 1, characterized in that locking elements (RE) are arranged between the sealing body sector cut-outs (DKS1, DKS2, DKS3).

4. Cable sleeve according to Claim 1, characterized in that sliding guides (SF, GN-GF) which hook into one another are arranged between the sealing body sector cutouts (DKS1, DKS2, DKS3).

5. Cable sleeve according to Claim 1, characterized in that a joint (G) is arranged at the end of the entry fitting sectors (ES1, ES2).

6. Cable sleeve according to one of the preceding claims, characterized in that plastic sealing inserts are arranged in the sealing planes (DE).

7. Cable sleeve according to one of Claims 1 to 5, characterized in that elastic sealing inserts are arranged in the sealing planes (DE).

8. Cable sleeve according to one of the preceding claims, characterized in that the angular division of the sectors is 180°.

9. Cable sleeve according to one of Claims 1 to 7, characterized in that the angular division of the sectors is unequal, the angular range referred to the centre point of an entry fitting for the sealing body sector cut-out (DKS1, DKS2, DKS3) which can be pulled off outwards being 10° to 180°, preferably 90° - 180°.

10. Cable sleeve according to one of the preceding claims, characterized in that a shoulder slope (AS) is arranged in the transition area between the entry fittings (ES) and the sealing body (DK).

11. Cable sleeve according to one of the preceding claims, characterized in that the entry fitting (ESZ) has a cylindrical shape.

12. Cable sleeve according to one of Claims 1 to 10, characterized in that the entry fitting (ESK) tapers conically towards the free end.

13. Cable sleeve according to one of the preceding claims, characterized in that the entry fitting (ES) is stepped in diameter shoulders (ESA).

14. Cable sleeve according to one of the preceding claims, characterized in that the entry fitting (ES) is terminated at the outer end with a separable terminating wall (SAA).

15. Cable sleeve according to one of Claims 1 to 13, characterized in that the entry fitting (ES) is terminated at the inner end with a separable terminating wall (SAI).

16. Cable sleeve according to one of the preceding claims, characterized in that a centring piece with matchable opening for the cable to be introduced is arranged in the entry fitting preferably at the outer end.

17. Cable sleeve according to one of the preceding claims, characterized in that conical diameter-compensating pieces (DA) are arranged at the free end of the entry fitting (ES).

18. Cable sleeve according to Claim 17, characterized in that the diameter-compensating pieces (DA) are constructed as tongues (Z), preferably coming to a point.

19. Cable sleeve according to one of Claims 17 or 18, characterized in that the diameter-compensating piece is constructed as a support insert (SE) with attached tongues (Z) which can be bent over conically along a bending line (KL).

20. Cable sleeve according to one of Claims 17 or 18, characterized in that the tongues (Z) are formed directly at the end of the entry fitting (ES).

21. Cable sleeve according to one of the preceding claims, characterized in that a heat-shrinkable hose (SS) is constructed as a diameter-compensating seal element.

22. Cable sleeve according to one of Claims 1 to 20, characterized in that a heat-shrinkable collar (SM) with a longitudinal slit and having a sealing system (V) is constructed as a diameter-compensating seal element.

23. Cable sleeve according to one of the preceding claims, characterized in that the diameter-compensating seal element is constructed as a branching unit having a clip-like distributor element (VE) between the cables leading out or leading in.

24. Cable sleeve according to one of the preceding claims, characterized in that a sleeve tube (MR), preferably consisting of thermoplastic material, is pulled over the circumferential sealing lips (DL) with inserted ring seals (RD) of the sealing bodies (DK) arranged on the end face and is closed off tightly with a sealing system preferably consisting of wedge-shaped longitudinal elevations (KW) and locking bars (KS) engaging round them.

25. Cable sleeve according to one of the preceding claims, characterized in that the entry fittings (ES) are directed outwards.

26. Cable sleeve according to one of Claims 1 to 14, characterized in that the entry fittings (ES) are directed inwards.

27. Cable sleeve according to one of the preceding claims, characterized in that the entry fitting (ES) consists of a tube which is tightly inserted into a cutout entry hole (EO) of the sealing body (DK).

## Revendications

1. Manchon de câble constitué d'un tube fendu longitudinalement, comportant un système longitudinal de fermeture et des pièces frontales d'étanchéité, dans lesquels sont aménagées des ouvertures d'introduction pouvant être fermées de façon étanche, au moins l'une des pièces d'étanchéité (DK) ayant au moins une tubulure d'introduction saillante (ES), qui possède deux séparations longitudinales qui s'étendent dans la direction de l'axe longitudinal jusque dans les pièces d'étanchéité (DK) en délimitant respectivement deux parties en forme de secteurs (DKS1, DKS2, DKS3) de la pièce d'étanchéité, qui se complètent, une pièce d'étanchéité (SS, SM) réalisant une compensation de diamètre étant montée à l'extrémité libre de chaque tubulure d'introduction,
caractérisé par le fait
que des ouvertures adaptées d'introduction (EO), qui peuvent être formées par découpage, sont ménagées, en plus des tubulures d'introduction (ES), dans la pièce d'étanchéité (DK), que la pièce d'étanchéité (DK) comporte de façon connue en soi, dans les ouvertures d'introduction supplémentaires, une structure (DKLS) formées de lamelles situées les unes derrière les autres, que les zones d'étanchéité (DZ) des plans de séparation de la pièce d'étanchéité (DK) comportent une structure à lamelles (DKLS) et que des dispositifs à rainure et languette sont disposés dans les plans d'étanchéité longitudinaux (DE) et que des éléments d'étanchéité (LD) sont disposés dans les plans de séparation longitudinaux de la tubulure d'introduction (ES) et de la pièce d'étanchéité (DK).

2. Manchon de câble suivant la revendication 1, caractérisé par le fait que des dispositifs de serrage, notamment des vis ou des colliers de serrage (SB) sont prévus pour la fermeture des parties en forme de secteurs (DKS1, DKS2, DKS3) de la pièce d'étanchéité.

3. Manchon de câble suivant la revendication 1, caractérisé par le fait que des éléments d'encliquetage (RE) sont disposés entre les parties en forme de secteurs (DKS1, DKS2,DKS3) de la pièce d'étanchéité.

4. Manchon de câble suivant la revendication 1, caractérisé par le fait que des glissières d'accrochage (SF, GN-GF) sont disposées entre les parties en forme de secteurs (DKS1, DKS2, DKS3) de la pièce d'étanchéité.

5. Manchon de câble suivant la revendication 1, caractérisé par le fait qu'une articulation (G) est montée sur l'extrémité des secteurs (ES1,DS2) de la tubulure d'introduction.

6. Manchon de câble suivant l'une des revendications précédentes, caractérisé par le fait que des inserts plastiques d'étanchéité sont disposés dans les plans d'étanchéité (DE).

7. Manchon de câble suivant l'une des revendications 1 à 5, caractérisé par le fait que des inserts élastiques d'étanchéité sont disposés dans les plans d'étanchéité (DE).

8. Manchon de câble suivant l'une des revendications précédentes, caractérisé par le fait que le pas angulaire pour la séparation en secteurs est égal à 180°.

9. Manchon de câble suivant l'une des revendications 1 à 7, caractérisé par le fait que le pas angulaire pour la séparation en secteurs n'est pas uniforme, la plage angulaire, rapportée au centre d'une tubulure d'introduction pour la partie en forme de secteur (DKS1, DKS2, DKS3) de la pièce d'étanchéité, qui peut être retirée sur le côté extérieur, est comprise entre 10° et 180° et de préférence entre 90° et 180°.

10. Manchon de câble suivant l'une des revendications précédentes, caractérisé par le fait qu'un biseau rapporté (AS) est disposé dans la zone de jonction entre la tubulure d'introduction (ES) et la pièce d'étanchéité (DK).

11. Manchon de câble suivant l'une des revendications précédentes, caractérisé par le fait que la tubulure d'introduction (ESZ) possède une forme cylindrique.

12. Manchon de câble suivant l'une des revendications 1 à 10, caractérisé par le fait que la tubulure d'introduction (ESK) se rétrécit avec une forme conique en direction de l'extrémité libre.

13. Manchon de câble suivant l'une des revendications précédentes, caractérisé par le fait que la tubulure d'introduction (ES) est étagée sous la forme de parties étagées dans le sens diamétral (ES1).

14. Manchon de câble suivant l'une des revendications précédentes, caractérisé par le fait que la tubulure d'introduction (ES) se termine, sur l'extrémité extérieure, par une paroi de fermeture séparable (SAA).

15. Manchon de câble suivant l'une des revendications 1 à 13, caractérisé par le fait que la tubulure d'introduction (ES) se termine, au niveau de l'extrémité intérieure, par une paroi de fermeture amovible (SAI).

16. Manchon de câble suivant l'une des revendications précédentes, caractérisé par le fait qu'une pièce de centrage comportant une ouverture adaptable pour le câble devant être inséré est disposée dans la tubulure d'introduction, de préférence à l'extrémité extérieure.

17. Manchon de câble suivant l'une des revendications précédentes, caractérisé par le fait que les éléments de compensation de diamètre (DA) de forme conique sont disposés à l'extrémité libre de la tubulure d'introduction (ES).

18. Manchon de câble suivant la revendication 17, caractérisé par le fait que les éléments de compensation de diamètre (DA) sont réalisés sous la forme de languettes (Z) taillées en pointe.

19. Manchon de câble suivant l'une des revendications 17 ou 18, caractérisé par le fait que l'élément de compensation de diamètre est réalisé sous la forme d'un insert d'appui (SE) dont sont solidaires des languettes (Z) qui sont repliées selon une disposition conique le long d'une ligne brisée (KL).

20. Manchon de câble suivant l'une des revendications 17 ou 18, caractérisé par le fait que les languettes (Z) sont formées directement sur l'extrémité de la tubulure d'introduction (ES).

21. Manchon de câble suivant l'une des revendications précédentes, caractérisé par le fait qu'un tuyau rétractable (SS) est prévu en tant qu'élément d'étanchéité compensant le diamètre.

22. Manchon de câble suivant l'une des revendications 1 à 20, caractérisé par le fait qu'un manchon rétractable fendu longitudinalement (SM) comportant un système de fermeture (V) est prévu en tant qu'élément d'étanchéité compensant le diamètre.

23. Manchon de câble suivant l'une des revendications précédentes, caractérisé par le fait que l'élément d'étanchéité compensant le diamètre est agencé sous la forme d'une unité d'embranchement comportant un élément répartiteur (VE) en forme de pince, entre les câbles qui sortent ou qui entrent.

24. Manchon de câble suivant l'une des revendications précédentes, caractérisé par le fait qu'un tube formant manchon (MR), réalisé de préférence en une matière thermoplastique, est emmanché sur les lèvres d'étanchéité circonférentielles (DL), dans lesquelles sont insérées des garnitures d'étanchéité annulaires (RD) des pièces d'étanchéité (DK) disposés frontalement, et est fermé d'une manière étanche au moyen d'un système de fermeture constitué de préférence par des bourrelets longitudinaux en forme de coins (KW) et des rails de serrage (KS) s'y accrochant.

25. Manchon de câble suivant l'une des revendications précédentes, caractérisé par le fait que les tubulures d'introduction (ES) sont dirigées vers l'extérieur.

26. Manchon de câble suivant l'une des revendications 1 à 14, caractérisé par le fait que les tubulures d'introduction (ES) sont dirigées vers l'intérieur.

27. Manchon de câble suivant l'une des revendications précédentes, caractérisé par le fait que la tubulure d'entrée (ES) est constituée d'un tube, qui est inséré d'une manière étanche dans une ouverture d'introduction découpée (EO) de la pièce d'étanchéité (DK).
